# NEUE EUROPÄISCHE PATENTSCHRIFT

(11) **EP 0 756 674 B2**
(45) Veröffentlichungstag und Bekanntmachung des Hinweises auf die Entscheidung über den Einspruch: **18.09.2002**
(45) Hinweis auf die Patenterteilung: 24.09.1997
(21) Anmeldenummer: 95917315.4
(22) Anmeldetag: 12.04.1995
(51) Int. Cl.: F16G 13/16

(54) **TRAVERSE FÜR EINE ENERGIEFÜHRUNGSKETTE**
TIE-BAR FOR POWER CONDUCTING CHAIN
ENTRETOISE POUR CHAINE CONDUCTRICE D'ENERGIE

(30) Priorität: 18.04.1994 DE 4413303
(43) Veröffentlichungstag der Anmeldung: 05.02.1997
(73) Patentinhaber: Kabelschlepp Gesellschaft mit beschränkter Haftung, 57074 Siegen (DE)
(72) Erfinder: WEBER, Willibald, D-57250 Netphen (DE); BRÄUTIGAM, Helmut, D-57074 Siegen (DE)
(74) Vertreter: Kahlhöfer, Hermann, Dipl.-Phys.
(86) Internationale Anmeldenummer: EP9501363
(87) Internationale Veröffentlichungsnummer: WO95028582

(56) Entgegenhaltungen:
- EP-A- 0 161 417
- EP-A- 0 415 050
- DE-A- 3 025 838
- DE-A- 4 105 653
- DE-C- 3 139 735
- DE-C- 3 414 412
- DE-C- 3 908 951
- DE-C- 4 015 803
- DE-U- 8 901 955
- FR-A- 2 210 739
- GB-A- 1 073 438
- US-A- 3 716 986
- EKD GELENKROHR KABELFÜHRUNGEN: "Gelenkige Rohre EKD GELENKROHR KABELFÜHRUNGEN: "Gelenkige Rohre und Ketten ...", FIRMENDRUCKSCHRIFT, , , Band und Ketten ...", FIRMENDRUCKSCHRIFT, , , Band 1984, Nr. 5, Seiten 2 - 15 1984, Nr. 5, Seiten 2 - 15
- Lieferschein Fa. ekd gelenkrohr Kabelführungen Lieferschein Fa. ekd gelenkrohr Kabelführungen über "1 PLP 52/400 x 6000/400 mit Metallanschl" über "1 PLP 52/400 x 6000/400 mit Metallanschl" (Datum unleserlich) (Datum unleserlich)
- Preisliste 1992 NIEDAX Preisliste 1992 NIEDAX Elektro-Installationsmaterial Elektro-Installationsmaterial
- IGUS: "Energieketten-Systeme Kunststoff", IGUS: "Energieketten-Systeme Kunststoff", FIRMENDRUCKSCHRIFT, Band 1992, Nr. 4, FIRMENDRUCKSCHRIFT, Band 1992, Nr. 4, Seiten 139-141 Seiten 139-141
- OBO BETTERMANN: "obo-Verbindungs- und OBO BETTERMANN: "obo-Verbindungs- und Befestigungs-Systeme", FIRMENDRUCKSCHRIFT, Befestigungs-Systeme", FIRMENDRUCKSCHRIFT, Band 1991, Nr.11, Seiten 106-131 Band 1991, Nr.11, Seiten 106-131
- EKD GELENKROHR KABELFÜHRUNGEN: "Gelenkige EKD GELENKROHR KABELFÜHRUNGEN: "Gelenkige Rohre und Ketten, "FIRMENDRUCKSCHRIFT, Band Rohre und Ketten, "FIRMENDRUCKSCHRIFT, Band 1988, Nr.7, Seiten 5,6,10,11 1988, Nr.7, Seiten 5,6,10,11
- KABELSCHLEPP ENERGIEFÜHRUNGEN: KABELSCHLEPP ENERGIEFÜHRUNGEN: "Energieführungsketten mit "Energieführungsketten mit Kunststoff-Kettenbändern", Kunststoff-Kettenbändern", FIRMENDRUCKSCHRIFT, Band 1988, Nr. 11, FIRMENDRUCKSCHRIFT, Band 1988, Nr. 11, Seiten 4,8 Seiten 4,8
- IGUS: "Energieketten-Systeme Kunststoff", IGUS: "Energieketten-Systeme Kunststoff", FIRMENDRUCKSCHRIFT, Band 1992, Nr.5, Seiten FIRMENDRUCKSCHRIFT, Band 1992, Nr.5, Seiten 142 142
- KABELSCHLEPP: "Bügel-und Bündelschellen", KABELSCHLEPP: "Bügel-und Bündelschellen", FIRMENDRUCKSCHRIFT, Band 1987, Nr.1, Seiten FIRMENDRUCKSCHRIFT, Band 1987, Nr.1, Seiten - -

## Beschreibung

Die Erfindung betrifft ein Endglied einer Energieführungskette.

Aus der EP-A-0 415 050 ist eine Energieführungskette bekannt geworden, die aus standardisierten Einzelteilen aus einem Baukasten aufgebaut werden kann. Ein Kettenglied wird aus zwei Seitenteilen, die in ihrer Form im wesentlichen gleich sein können, gebildet, die Seitenteile über mindestens eine Traverse verbunden sind. Die Seitenteile weisen Anlenkabschnitt auf, mit denen die Kettenglieder untereinander verbunden werden. Um die Energieführungskette an einem Festpunkt bzw. an einem beweglichen Punkt zu befestigen, wurden speziell geformte Seitenteile bereitgestellt, die jeweils einen Anlenkabschnitt haben, um an das letzte Glied der Energieführungskette angelenkt zu werden. Das so konstruierte Baukastensystem erfordert insgesamt bis zu vier verschiedene, speziell geformte Seitenteile, die zum Anschluß der Energieführungskette verwendet werden können. Darüber hinaus ist zur Verbindung zwischen dem Festpunkt bzw. dem beweglichen Punkt und der Energieführungskette an jedem der speziell geformten Seitenteile noch ein Winkelelement erforderlich.

Es sind auch andere Möglichkeiten bekannt, um derartige Energieführungsketten an einem Festpunkt bzw. an einem beweglichen Punkt zu befestigen. Dazu werden z. B. jeweils in den Seitenteilen eines normalen Kettengliedes Durchführungen vorgesehen, die quer zur Kettenrichtung und parallel zu den Seitenteilen verlaufen. In diese Durchführungen können Schrauben eingebracht werden, mit denen die jeweils letzten Seitenteile der Energieführungskette an dem Festpunkt bzw. dem beweglichen Punkt befestigt werden können. Wenn die Bereitstellung spezieller Seitenteile für die Endglieder der Energieführungskette vermieden werden soll, muß eine solche Durchführung in jedem Seitenteil eines normalen Kettengliedes vorgesehen werden. Da an den Befestigungspunkten der Energieführungskette hohe Kräfte aufgenommen werden müssen, muß auch der die Durchführungen umgebende Bereich entsprechend verstärkt ausgeführt werden. Dies führt dazu, daß ein solches Seitenteil unnötig groß und schwer gestaltet werden muß.

Durch das Gbm 8901 955 ist eine Energieführungskette bekannt, welche aus einzelnen Kettengliedern aufgebaut ist. Jedes Kettenglied umfaßt zwei lösbare, die Seitenteile des Kettengliedes miteinander verbindbare Stege, die unter Ausbildung von Preßsitzen auf entsprechende Vorsprünge der Seitenteile aufgesteckt sind. Um die Energieführungskette an einem Festpunkt bzw. einem beweglichen Punkt zu befestigen, ist der Steg eines Endgliedes mit einer Befestigungsfahne ausgebildet.

Der vorliegenden Erfindung liegt die Aufgabe zugrunde, eine Möglichkeit zur Befestigung von Zugentlastungseinrichtungen in den Endgliedern, zu schaffen, insbesondere auch als Nachrüstung für bereits im Einsatz befindliche Energieführungsketten. Ein weiteres Ziel der Erfindung ist es, eine solche Anschlußmöglichkeit für Energieführungsketten zu schaffen, daß die Bereitstellung spezieller Anschlußglieder nicht mehr erforderlich ist.

Das Ziel der Erfindung wird erreicht mit den Merkmalen des Anspruchs 1. Vorteilhafte Weiterbildungen sind Gegenstand der Unteransprüche.

Durch den erfindungsgemäßen Vorschlag wird ein Endglied mit in einer Traverse angeordneten Zugentlastungselementen angegeben, das einfach und somit kostengünstig herstellbar ist. Die Traverse kann insbesondere für sich bereits im Einsatz befindende Energieführungsketten eingesetzt werden, da ein nachträglicher Einbau in solche Ketten möglich ist. Im Gegensatz zu dem bekannten Stand der Technik kann insbesondere eine Energieführungskette aus gleichen Kettengliedern aufgebaut werden. Die Bereitstellung spezieller Seitenteile für die Endglieder der Energieführungskette werden vermieden. Dies hat den Vorteil, daß keine zusätzlichen Werkzeuge zur Herstellung der Endglieder notwendig sind.

Es ist weiterhin bevorzugt, daß die Verbindungseinrichtungen im Bereich der Stirnseiten der wulstartigen Erhebungen angeordnet sind. Vorzugsweise sind die Verbindungseinrichtungen Bohrungen, in die Schrauben eindrehbar sind.

Die Befestigungsnut der Traverse kann in ihrem Querschnitt symmetrisch oder unsymmetrisch ausgebildet sein, je nach Ausbildung der zu befestigenden Elemente. Die Befestigungsnut weist vorzugsweise Hinterschneidungen auf.

Die Traverse des Endgliedes nach der Erfindung wird vorzugsweise von einem Aluminiumprofilstück abgelängt. Insbesondere wird dieses Aluminiumprofilstück als ein Stranggußprofil bereitgestellt.

Weitere Vorteile und Anwendungsmöglichkeiten der vorliegenden Erfindung ergeben sich aus der nachfolgenden Beschreibung von Ausführungsbeispielen in Verbindung mit den Zeichnungen. In den Zeichnungen zeigen:
- Fig. 1: ein erstes Ausführungsbeispiel einer Traverse vor dem Zusammenbau mit Seitenteilen eines Endglieds einer Energieführungskette;
- Fig. 2: ein zweites Ausführungsbeispiel einer Traverse vor dem Zusammenbau mit Seitenteilen eines Endgliedes einer Energieführungskette;
- Fig. 3: eine Seitenquerschnittsansicht der zusammengebauten Anordnung von Fig. 2:
- Fig. 4: ein Ausführungsbeispiel einer Traverse mit Zugentlastungseinrichtung; und
- Fig. 5: eine alternative Ausgestaltung des Profils der Befestigungsnut der Traverse in Verbindung mit einer dafür ausgelegten Zugentlastungseinrichtung.

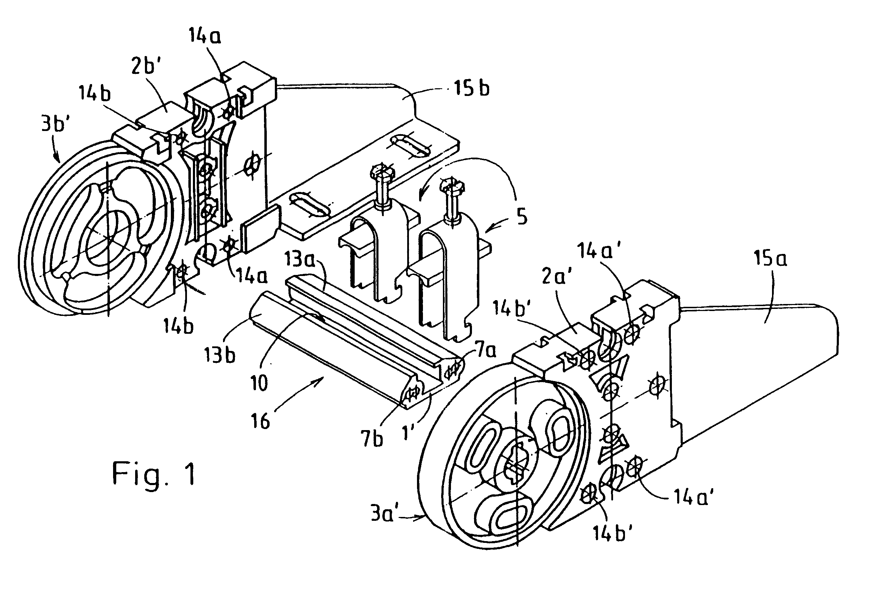

Fig. 1 zeigt eine auseinandergezogene Ansicht eines speziell ausgebildeten Kettenendgliedes einer Energieführungskette, in das eine Traverse 16 eingebaut werden soll. Das Kettenendglied weist zwei speziell geformte Seitenteile 2a', 2b' auf, welche ihrerseits jeweils mindestens einen Anlenkabschnitt 3a', 3b' aufweisen, so daß das Kettenendglied mit einer Energieführungskette verbunden werden kann. Die Anlenkabschnitte 3a', 3b' entsprechen dabei den jeweiligen Anlenkabschnitten eines normalen Kettengliedes der Energieführungskette.

Mit den Seitenteilen 2a', 2b' des Kettenendgliedes sind jeweils Winkelelemente 15a, 15b verbunden, mit denen die Befestigung des Kettengliedes, und damit der gesamten Energieführungskette, an einem Festpunkt bzw. einem beweglichen Punkt der Energieführungskette erreicht wird. Die Traverse 16 wird zwischen den Seitenteilen 2a', 2b' des Kettenglieds angeordnet. Dazu sind an den Stirnseiten der Traverse 16 Bohrungen 7a, 7b eingelassen deren Abstand an den Abstand entsprechender Durchführungen 14a, 14b in den Seitenteilen 2a', 2b' angepaßt ist. In die Bohrungen 7a, 7b können Schrauben eingedreht werden, die als Verbindungsmittel zwischen der Traverse 16 und den Seitenteilen 2a', 2b' dienen.

Die Traverse 16 ist ein Profilkörper mit zwei langgestreckten Wulsten 13a, 13b die zwischen sich eine Befestigungsnut 10 definieren. Die Wulste 13a, 13b sind durch eine Bodenplatte 1 verbunden, die den Boden der Befestigungsnut 10 festlegt. Der Querschnitt der Befestigungsnut 10 in dem in Fig. 1 gezeigten Ausführungsbeispiel ist unsymmetrisch; es sind jedoch auch symmetrische Querschnitte möglich. In Fig. 1 sind weiterhin Zugentlastungselemente 5 dargestellt, die in der Befestigungsnut 10 befestigt werden. In der Bodenplatte 1 können Einrichtungen, insbesondere Anschlußbohrungen 4, zum Verbinden der Traverse 16 mit einem Festpunkt bzw. einem beweglichen Punkt der Energieführungskette bereitgestellt sein.

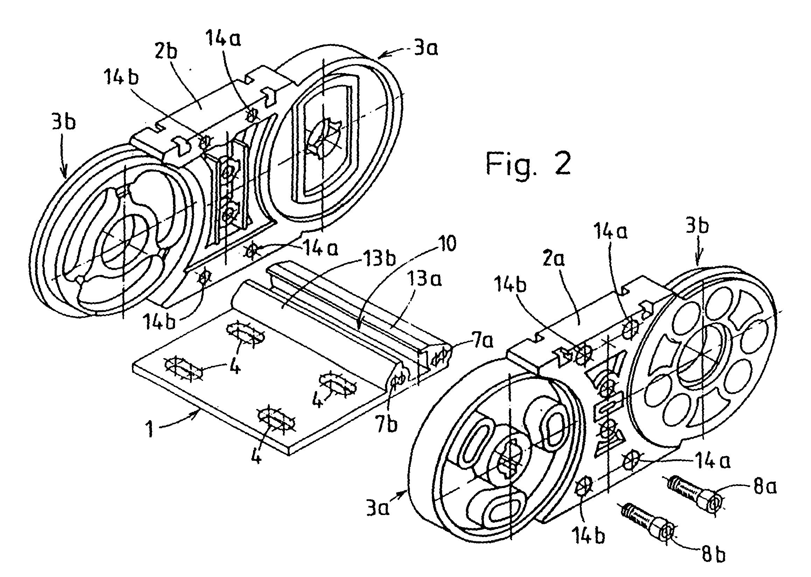

Fig. 2 zeigt eine auseinandergezogene Ansicht eines Ketlenendgliedes einer Energieführungskette, bei der ein Ausführungsbeispiel einer Traverse 16 mit Bodenplatte 1 als Anschlußplatte verwendet wird. Die Bodenplatte 1 ist zwischen zwei Seitenteilen 2a, 2b angeordnet, die für normale Kettenglieder der Energieführungskette gedacht sind. Die Seitenteile 2a, 2b haben jeweils Anlenkabschnitte. In einem zwischen den Anlenkabschnitten 3a, 3b liegenden mittleren Abschnitt der Seitenteile 2a, 2b sind jeweils Verbindungsbohrungen 14a, 14b angeordnet. Jedes Seitenteil 2a, 2b weist dabei zwei Sätze von Verbindungsbohrungen 14a, 14b auf, so daß die Traverse 16 in mindestens zwei verschiedenen Positionen montiert werden kann.

Die Bodenplatte 1 ist im wesentlichen rechteckförmig. Die Bodenplatte 1 weist im gezeigten Ausführungsbeispiel vier Bohrungen auf, mit denen die Bodenplatte 1 an einem Festpunkt bzw. an einem beweglichen Punkt montiert werden kann. Am Rand einer Seite sind zwei wulstartige Erhebungen 13a, 13b angeformt, wobei der zwischen den wulstartigen Erhebungen 13a, 13b liegende Bereich eine Befestigungsnut 10 bildet. An den Stirnseiten der wulstartigen Erhebungen 13a, 13b sind jeweils Bohrungen 7a, 7b vorgesehen. Der Abstand der Bohrungen 7a, 7b ist dabei an den Abstand der Durchführungen 14a, 14b der Seitenteile 2a, 2b angepaßt.

Wie in Fig. 2 veranschaulicht, können an den Stirnseiten der wulstartigen Erhebungen 13a, 13b mehrere nebeneinander liegende Bohrungen 7a, 7b angeordnet sein, damit die Bodenplatte 1 für verschiedene Typen von Seitenteilen 2a, 2b geeignet ist. Die Seitenteile 2a, 2b werden über Schrauben 8a, 8b mit den Wulsten 13a, 13b verbunden, wobei die Schrauben durch die Durchführungen 14a, 14b in die Bohrungen 7a, 7b der wulstartigen Erhebungen 13a, 13b eingedreht werden. Auf diese Weise entsteht eine feste Verbindung zwischen den Seitenteilen 2a, 2b und der Bodenplatte 1 und damit zwischen der Energieführungskette und dem Festpunkt bzw. dem beweglichen Punkt.

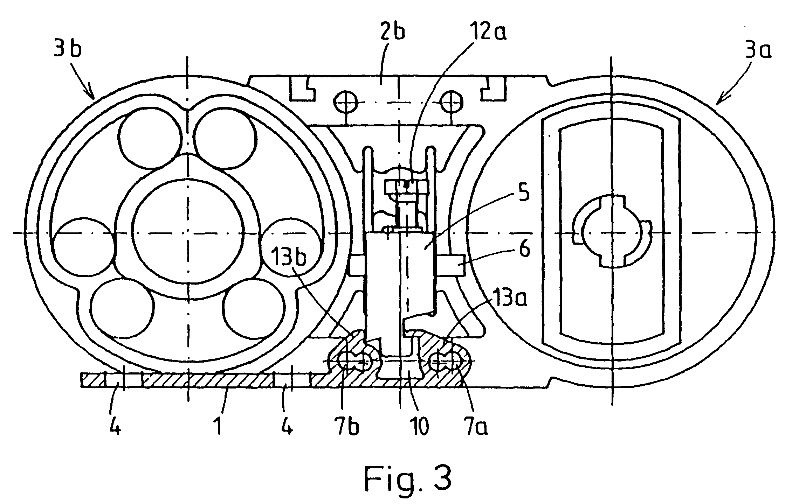

Fig. 3 zeigt ein gemäß Fig. 2 montiertes Kettenendglied im Querschnitt. Die Bodenplatte 1 ist im Schnitt dargestellt, während das Seitenteil 2b in einer Seitenansicht erscheint. Fig. 3 veranschaulicht, daß die Bohrungen 7a, 7b fluchtend zu den Durchführungen 14a, 14b der Seitenteile 2a, 2b angeordnet sind, und daß die Unterseite der Bodenplatte 1 bündig mit der Auflagefläche der Seitenteile 2a, 2b zur Anlage kommt.

In Fig. 3 ist eine Befestigungsnut 10 dargestellt, die durch die unsymmetrischen wulstartigen Erhebungen 13a, 13b gebildet wird. In diese Befestigungsnut 10 ist ein Zugentlastungselement 5 eingefügt. In dem Zugentlastungselement 5 ist eine Energieleitung 6 durch eine Klemmschraube 12a befestigt. Die Energieleitung 6 ist zum Beispiel ein Elektrokabel. Durch die unsymmetrische Befestigungsnut 10 ist es möglich, daß das Zugentlastungselement 5 direkt in die Befestigungsnut 10 eingefügt werden kann und nicht von der Seite her eingeschoben zu werden braucht. Das Zugentlastungselement 5 wird durch die Zugkraft der Energieleitung 6 ständig unter einer derartigen Zugspannung gehalten, daß sich das Zugentlastungselement 5 nicht aus der Befestigungsnut 10 lösen kann.

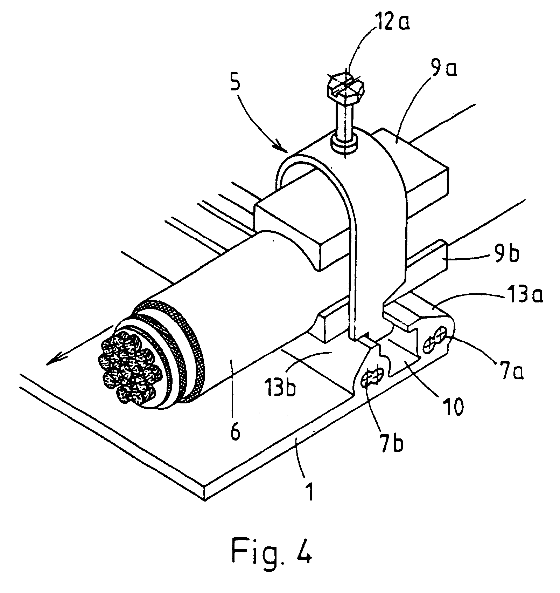

In Fig. 4 ist im Detail die Anordnung eines Zugentlastungselements 5 an der Bodenplatte 1 gezeigt. Die Energieleitung 6 ist in dem Zugentlastungselement mittels zweier Klemmbacken 9a, 9b befestigt. Dabei ist es erforderlich, daß auf das Zugentlastungselement 5 durch die Energieleitung 6 ständig ein durch den Pfeil in Fig. 4 dargestellter Zug wirkt, damit sich das Zugentlastungselement 5 nicht aus der Befestigungsnut 10 lösen kann.

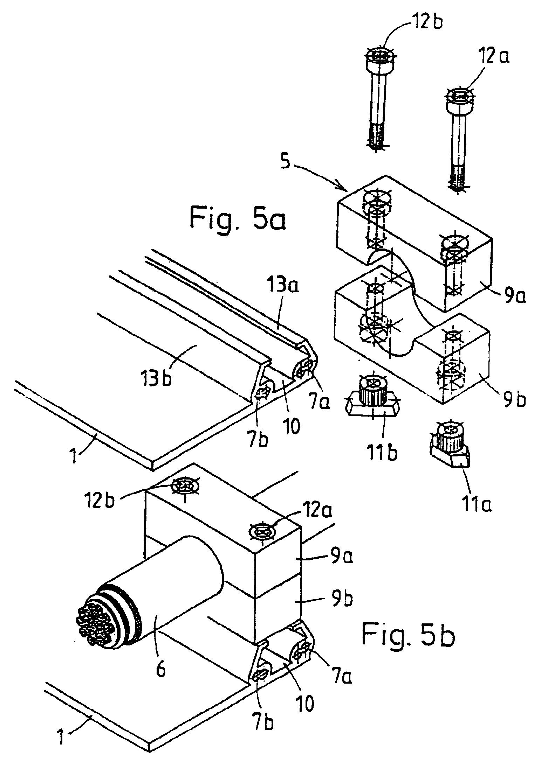

In Fig. 5 ist ein anderes Zugentlastungselement dargestellt, das mit einer im wesentlichen symmetrisch gestalteten Befestigungsnut 10 verwendet werden kann. Fig. 5a zeigt die Bodenplatte 1 und das Zugentlastungselement 5 in einer Explosionzeichnung. Das Zugentlastungselement 5 besteht im wesentlichen aus zwei Klemmbacken 9a, 9b, die mit Klemmschrauben 12a, 12b und besonders gestalteten Befestigungsmuttern 11a, 11b verbindbar sind. Die Befestigungsmuttem 11a, 11b sind in ihrer Form an den Querschnitt der Befestigungsnut 10 angepaßt. Der Kopf der Befestigungsmuttern 11a, 11b ist von länglicher Gestalt, so daß die Befestigungsmuttern 11a, 11b in ihrer Längsrichtung in die Befestigungsnut 10 eingeführt werden können. Die schmalen Stirnseiten des Kopfes der Befestigungsmuttem 11a, 11b sind abgerundet, so daß die Befestigungsmuttern 11a, 11b in der Befestigungsnut 10 verdreht werden können. Die Befestigungsmuttern 11a, 11b greifen dann in die Hinterschneidungen der Befestigungsnut 10 ein. Die Klemmbacken 9a, 9b können dann mittels der Klemmschrauben 12a, 12b über die Befestigungsmuttern 11a, 11b, die mit der Befestigungsnut 10 in Eingriff sind, an der Bodenplatte 1 befestigt werden. Fig. 5b zeigt diese Anordnung im zusammengebauten Zustand. Auch dieses Zugentlastungselement braucht nicht von der Seite der Befestigungsnut 10 aufgeschoben zu werden. Darüberhinaus erübrigt sich auch aufgrund des Eingriffs der Befestigungsmuttem 11a, 11b in der Befestigungsnut 10 die Notwendigkeit, am Leitungselement 6 eine ständige einseitige Zugkraft sicherzustellen, wie dies bei dem in Fig. 4 gezeigten Zugentlastüngselement 5 der Fall ist.

Die Traverse kann mit normalen Seitenteilen eines Kettenglieds der Energieführungskette als Kettenendglied verwendet werden. Die Bereitstellung spezieller Seitenteile, die für ein Kettenendglied benötigt werden, erübrigt sich daher. Die Traverse stellt neben ihrer Funktion des Anschlusses des Kettenendglieds an einem Festpunkt bzw. an einem beweglichen Punkt weiterhin eine Befestigungseinrichtung bereit, mit der. Zugentlastungselemente befestigt werden. Die Traverse hat dabei weiterhin den Vorteil, daß die Zugkräfte der sich in der Energieführungskette befindlichen Energieleitung direkt auf den Festpunkt bzw. den beweglichen Punkt übertragen werden, an dem die Traverse über entsprechende Bohrungen befestigt ist. Diese Zugkräfte wirken daher nicht auf die Seitenteile des Kettenendglieds, was zu einer besonderen Beanspruchung dieser Teile führen würde.

Vorzugsweise besteht die Traverse aus Aluminium. Es wird dabei vorzugsweise von einem Stranggußprofil abgelängt. Die Traverse kann daher problemlos an jede beliebige Breite einer Energieführungskette angepaßt werden. Dies trifft auch auf das Bohrbild der Bohrungen 4 zu, die vorzugsweise erst bei der Endmontage eingebracht werden.

### BEZUGSZEICHENLISTE

- 1: Bodenplatte
- 2a, 2b: Seitenteile eines Kettenglieds
- 2a', 2b': Seitenteile eines Kettenendglieds
- 3a, 3b: Anlenkabschnitte eines Seitenteils
- 3a', 3b': Anlenkabschnitte eines Seitenteils eines Kettenendglieds
- 4: Anschlußbohrungen
- 5: Zugentlastungselement
- 6: Energieleitung
- 7a, 7b: Bohrungen
- 8a, 8b: Schrauben
- 9a, 9b: Klemmbacken
- 10: Befestigungsnut
- 11a, 11b: Befestigungsmuttern
- 12a, 12b: Klemmschrauben
- 13a, 13b: wulstartige Erhebungen
- 14a, 14b: Durchführungen
- 15a, 15b: Winkelelement
- 16: Traverse

## Patentansprüche

1. Endglied einer Energieführungskette mit einer Traverse, die stirnseitig mit Seitenteilen des Endgliedes lösbar verbunden ist, **dadurch gekennzeichnet, dass** die Traverse (16) mit einer zur Endgliedmitte offenen Befestigungsnut (10) versehen ist, die durch zwei parallele Wulste (13a, 13b) begrenzt ist, die über eine Bodenplatte (1) miteinander verbunden sind, und in der Befestigungsnut (10) Zugentlastungselemente (5) angeordnet sind.

2. Endglied nach Anspruch 1, **dadurch gekennzeichnet, daß** in der Bodenplatte (1) mindestens eine Anschlußbohrung (4) ausgebildet ist.

3. Endglied nach Anspruch 1 oder 2, **dadurch gekennzeichnet, daß** Verbindungseinrichten (7a, 7b) an den Stirnseiten der Wulste (13a, 13b) angeordnet sind.

4. Endglied nach Anspruch 3, **dadurch gekennzeichnet, daß** die Verbindungseinrichtungen (7a, 7b) Bohrungen sind, in die Schrauben (8a, 8b) eindrehbar sind.

5. Endglied nach einem der vorhergehenden Ansprüche, **dadurch gekennzeichnet, daß** die Befestigungsnut (10) eine unsymmetrische Querschnittsgestalt hat.

6. Endglied nach einem der Ansprüche 1 bis 4, **dadurch gekennzeichnet, daß** die Befestigungsnut (10) eine symmetrische Querschnittsgestalt hat.

7. Endglied nach Anspruch 2, **dadurch gekennzeichnet, daß** in der Bodenplatte (1) vier Anschlußbohrungen (4), vorzugsweise symmetrisch, angeordnet sind.

8. Endglied nach einem der vorhergehenden Ansprüche, **dadurch gekennzeichnet, daß** die Traverse (16) von einem Aluminiumprofilstück, vorzugsweise einem Stranggußprofil, abgelängt ist.

## Claims

1. End link of a power conducting chain with a tie bar, which is connected releasably at the end faces to the side parts of the end link, **characterized in that** the tie bar (16) is provided with a fastening groove (10), which is open toward the center of the end link, which groove is delimited by two parallel beads (13a, 13b), which are connected to one another via a base plate (1) and **in that** strain relief elements (5) are arranged in the fastening groove (10).

2. End link according to claim 1, **characterized in that** at least one connecting bore (4) is formed in the base plate (1).

3. End link according to claim 1 or 2, **characterized in that** connecting devices (7a, 7b) are arranged at the end faces of the beads (13a, 13b).

4. End link according to claim 3, **characterized in that** the connecting devices (7a, 7b) are bores into which screws (8a, 8b) can be screwed.

5. End link according to one of the preceding claims, **characterized in that** the fastening groove (10) has an asymmetrical cross sectional form.

6. End link according to one of claims 1 to 4, **characterized in that** the fastening groove (10) has a symmetrical cross sectional form.

7. End link according to claim 2, **characterized in that** four connecting bores (4) are arranged in the base plate (1), preferably symmetrically.

8. End link according to one of the preceding claims, **characterized in that** the tie bar (16) is cut to length from an aluminum profile, preferably from a strand cast profile.

## Revendications

1. Maillon d'extrémité d'une chaîne conductrice d'énergie comportant une entretoise qui est reliée frontalement et de manière détachable avec des parties latérales du maillon d'extrémité, **caractérisé en ce que** l'entretoise (16) est pourvue d'une rainure de fixation (10) ouverte vers le centre du maillon d'extrémité et limitée par deux bourrelets parallèles (13a, 13b) qui sont reliés entre-eux par une plaque de fond (1) et **en ce que** des éléments de soulagement de traction (5) sont agencés dans la rainure de fixation (10).

2. Maillon d'extrémité selon la revendication 1, **caractérisé en ce qu'**au moins un trou de raccordement (4) est pratiqué dans la plaque de fond (1).

3. Maillon d'extrémité selon la revendication 1 ou 2, **caractérisé en ce que** des dispositifs de liaison (7a, 7b) sont agencés sur les faces frontales des bourrelets (13a, 13b).

4. Maillon d'extrémité selon la revendication 3, **caractérisé en ce que** les dispositifs de liaison (7a, 7b) sont des trous dans lesquels des vis (8a, 8b) peuvent être vissées.

5. Maillon d'extrémité selon l'une des revendications précédentes, **caractérisé en ce que** la rainure de fixation (10) présente une section de forme asymétrique.

6. Maillon d'extrémité selon l'une des revendications 1 à 4, **caractérisé en ce que** la rainure de fixation (10) présente une section de forme symétrique.

7. Maillon d'extrémité selon la revendication 2, **caractérisé en ce que** quatre trous de raccordement (4) sont pratiqués, de préférence de manière symétrique, dans la plaque de fond (1).

8. Maillon d'extrémité, selon l'une de revendications précédentes, **caractérisé en ce que** l'entretoise (16) est coupée à longueur à partir d'un profilé en aluminium, de préférence d'un profilé coulé en continu.
